# EUROPEAN PATENT APPLICATION

(11) **EP 0 887 226 A1**
(43) Date of publication of application: **30.12.1998**
(21) Application number: 98304507.1
(22) Date of filing: 08.06.1998
(51) Int. Cl.: B60P 7/08

(54) **Strap tensioning buckle**

(30) Priority: 19.06.1997 GB 9712948
(71) Applicant: BRAIDEX LIMITED, Fengate, Peterborough PE1 5BJ (GB)
(72) Inventor: Rimes, David Walter Gidney, South Longthorpe, Peterborough, PE3 6SY (GB); Day, Jeffrey Paul Arnold, London, NW3 6UX (GB)
(74) Representative: Hillier, Peter

(57) **Abstract**

A strap tensioning buckle for use in securing side curtains for weather protection and restraining cargo on road freight vehicles, rail, shipping, aircraft & tension structures. The buckle comprises a base member (1) having spaced apart side plates (2, 3) interconnected by one or more crossbars. A handle (7) is pivotally mounted at one end on the base member, typically on a pin (12). The handle member has spaced apart side plates (8, 9) interconnected by one or more crossbars (10, 11). The base member (1) fits within the handle member (7) such that when the buckle is in a closed position the crossbars (10, 11) overlie the gap the base member side plates (2, 3) and the handle side plates (8, 9) preventing penetration of water, salt and grit into the gap.

## Description

The invention relates to strap tensioning buckles for use, e.g. in securing side curtains for weather protection and restraining cargo on road freight vehicles, rail, shipping, aircraft and tension structures.

Strap tensioning buckles are well known and a particularly successful type is described in published UK patent specification GB 1 444 853. Figure 1 of the attached drawings shows a plan view of the buckle disclosed in GB 1 444 853. Referring to Figure 1, the prior art buckle comprises a base member 1 formed by a pair of spaced apart side flanges or plates 2 and 3 which are joined together at one of their longitudinal edges by a plurality of cross bars 4 to 6. A handle 7 is formed by a pair of spaced apart plates 8 and 9 which are joined together at their top edges by cross bars 10 and 11. Both the handle and base member are single pressed parts which have been formed to the required shape by additional forming operations. A rolled back lip 2a provides a rounded surface to minimise strap chafing.

The Handle 7 is pivotally supported in base member 1 on a pin member 12 which is fixedly attached to side flanges or plates 2 and 3 by rivets 13 and 14, or by any other convenient means. The ends of side plates 8 and 9 have apertures therein through which pin member 12 fits so as to permit rotary movement of the handle 7 on the pin member 12. GB 1 444 853 relates to an improved latching mechanism intended to allow the buckle to be easily opened whilst providing a positive latching action. This latching mechanism is the preferred latching mechanism for the buckle of the present invention and the disclosure of GB 1 444 853 is incorporated herein by reference. However, other latching mechanisms can be used with the buckle of the present invention.

Whilst there are many strap tensioning buckles on the market, there is little deviation from the basic arrangement of the prior art buckle as described above. In particular, the handle portion is always located within the base member such that there is an exposed gap between the side plates 2 and 3 of the base member and the side plates 8 and 9 of the handle.

The prior art buckles suffer from a problem in that
there is a tendency for grit, salt and water to accumulate in the exposed gap between the plates of the base and handle. In particular, on road, rail and ferry journeys there is a significant likelihood of the buckle freezing because of the ingress of water, salt and grit, and the effect of the wind chill. When this occurs, far from the buckle being easy to open, it is often necessary to use a hammer, lever or even occasional steam cleaning to enable the buckle or buckles to be opened with minimum effort. This is a problem in the industry which causes increased labour and also increases the off road time of the vehicle.

It is an object of the present invention to overcome the above mentioned problem.

Accordingly, the invention provides a strap tensioning buckle comprising a base member having a first pair of spaced apart side plates interconnected by at least one first crossbar, a handle member having a second pair of spaced apart side plates being interconnected by at least one second crossbar, the handle member being pivotally mounted at one end thereof on the base member, wherein the second pair of side plates are spaced further apart than said first pair of side plates such that, when the buckle is in a closed position, said at least one second crossbar overlies said first pair of spaced apart plates.

The object of the invention is achieved by arranging the handle and base members so that the base member fits substantially within the handle and the cross bars of the handle cover portions of the exposed gap between the side plates significantly increasing the weather protection and reducing the likelihood of freezing.

Preferably, said at least one second crossbar is located substantially at an end of said handle member distal from the end pivotally supported by said base member. It is particularly important to prevent freezing or jamming of the handle member to the base member at the far end from the fulcrum of the pivot as there is a dramatic decrease in the amount of leverage for overcoming any resistance to opening of the buckle.

The buckle of the present invention may be provided with a strap, wherein the width of the strap is substantially the same as the distance between said first pair of side plates.

Further advantages of the invention will become apparent in the following description of an example of the invention described with reference to the accompanying drawings, in which:

Figure 1 is a plan view of a prior art strap tensioning buckle

Figure 2 is a plan view of a strap tensioning buckle of the present invention.

Figure 3 is a schematic side elevation of the buckle of figure 2 showing the buckle in a closed position and a strap fitted thereto.

Figure 4 is a similar view to figure 3 showing the buckle in an open position.

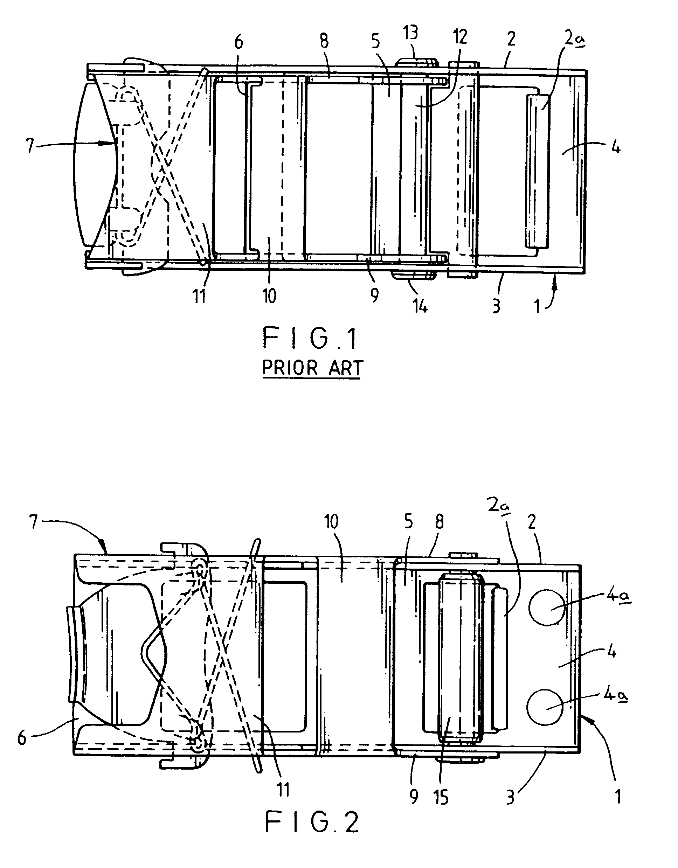

The prior art buckle has been described with reference to figure 1. In the following description of the invention with reference to figures 2 to 4, like parts are numbered with identical reference numerals.

The base member 1 and handle 7 are substantially the same as described above in relation to the prior art, however, the handle is not pivotally supported in the handle member, instead the side plates 8 and 9 of the handle are sized such that they lie externally of the plates 2, 3 of the base member. A cross bar 10 and a cross bar or plate 11' interconnect the side plates 8 and 9 and extend across the side plates 2 and 3 of the base member. The cross plate 11' is shown in figure 2 as having side portions which extend to the end of the handle 7 so that, at least at the far end from the pin 12, the gap between the side plates 2 and 3 and the respective side plates 8 and 9 are covered by the cross plate 11' so as to prevent ingress of water and grit etc.

Apertures 4a are provided for securing the buckle to a load cover and apertures 4b are provided for conventional fixing of the buckle in known manner. Apertures 4c which are provided in plates 2, 3, 8, and 9 allow, when the buckle is closed, a 'TIR' cable to be threaded through the buckle and secured in known manner. Apertures 4c are not shown in Fig 4, for clarity.

When trailers are loaded onto ferries or are garaged the sides of the trailers are frequently in close proximity and the prior art buckles having the handle portion located in the base member are prone to 'locking', whereby the buckles can be unintentionally opened as they engage with another buckle and are occasionally dragged from the trailer curtain; sometimes causing tears to curtains and requiring major repairs. This is a significant problem which reduces the on road time of the vehicle. The handle 7 of the present invention acts as a cover for the base member. The buckle, therefore, has a 'cleaner' profile which reduces the occurrence of 'locking' exhibited by prior art buckles.

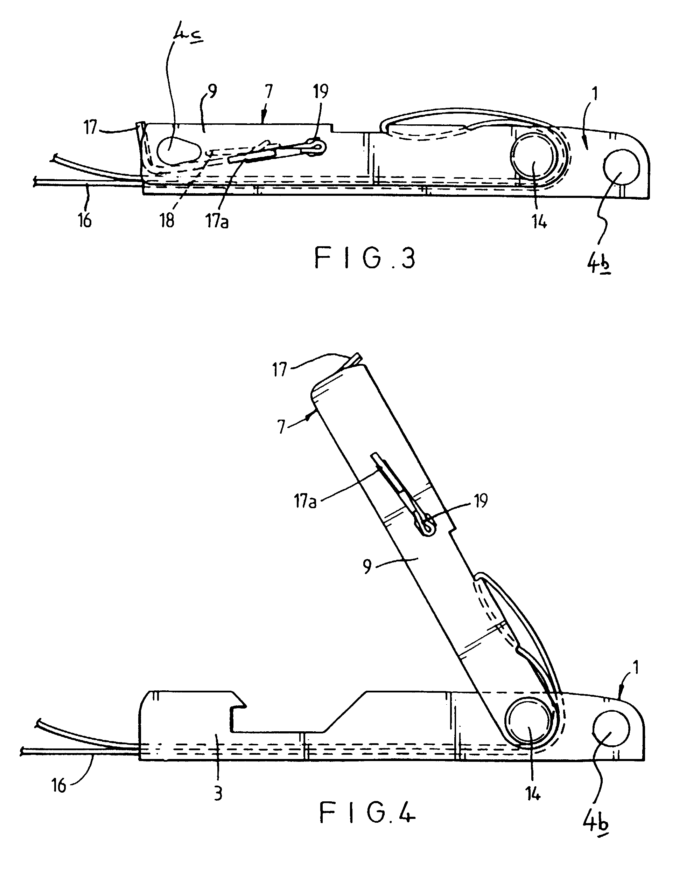

The pin 12 shown in figure 2 is provided with a roller 15 which is free to rotate on the fixed pin and helps to reduce operating torque and friction and thereby wear on the strap 16. The strap 16 is shown fitted to the buckle in figures 3 and 4. The functioning of the buckle is well known. As the handle 7 is moved from the open position of figure 4 to the closed position of figures 2 and 3 the strap is thereby tensioned.

A further improvement which is provided by the present invention is that the strap 16 can be sized to fit to the width of the base member rather than the slightly narrower width of the handle 7 as it is in the prior art buckle. This has the advantage that the strap 16 fits across the entire width of the roller. The strap 16 is prevented from 'floating' about within the buckle because it is retained by the side plates of the base member. This gives an improvement in the tensile strength of the buckle in use. In the prior art buckles the strap 16 fits the handle member and tends to float within the base member, thus the tensile forces on the buckle in use may not be substantially normal to the axis of the pin and the in use tensile strength is reduced.

The figures show a latching mechanism consisting of a latch bar 17 slidably mounted in slots 18 of the handle member 7 and a spring 19 which resiliently urges the latch bar forward so that ends 17a of the latch bar engage an end of the slots 18. As shown in figure 4, side plates 2 and 3 of the base member have hooked end portions 19 which receive the ends 17a when the buckle is in the latched position. The latching mechanism of the preferred embodiment is described in greater detail in GB 1 444 853. However, any suitable latch mechanism can be used.

A further improvement provided by the present invention is a weight saving over the prior art buckles. For a typical road freight vehicle a small saving in weight can provide significant savings over time in terms of fuel consumption and payload on the vehicle. A weight saving is achieved because, whilst the size of the handle portion is increased, the size of the base member, the heaviest portion, is decreased, giving an overall weight reduction. This is achieved without sacrificing tensile strength of the buckle in use.

The buckle is preferably made of stainless steel, however, other materials having the required strength and weather resistance could be substituted, included mild steel, plastics and Nylon.

Whilst an embodiment of the invention has been described, modifications will suggest themselves to those skilled in the art which fall within the scope of the invention as defined in the appended claims.

## Claims

1. A strap tensioning buckle comprising a base member (1) having a first pair of spaced apart side plates (2, 3) interconnected by at least one first crossbar (4, 6), a handle member (7) having a second pair of spaced apart side plates (8, 9) being interconnected by at least one second crossbar (10), the handle member (7) being pivotally mounted at one end thereof on the base member (1), characterised in that the second pair of side plates (8, 9) are spaced further apart than said first pair of side plates (2, 3) such that, when the buckle is in a closed position, said at least one second crossbar (10) overlies said first pair of spaced apart plates.

2. A strap tensioning buckle as claimed in claim 1, wherein said at least one second crossbar (10) is located substantially at an end of said handle member (7) distal from the end pivotally supported by said base member (1).

3. A strap tensioning buckle as claimed in claim 2, wherein said at least one second crossbar (10) forms a cross plate which substantially covers a region of abutment between the first (2, 3) and second (8, 9) side plates at said distal end.

4. A strap tensioning buckle as claimed in any previous claim and comprising a strap (16), wherein the width of the strap is substantially the same as the distance between said first pair of side plates (2, 3).
